(19) Europäisches Patentamt / European Patent Office / Office européen des brevets

(11) **EP 3 063 904 B1**

(12) **EUROPEAN PATENT SPECIFICATION**

(45) Date of publication and mention
of the grant of the patent:
**24.02.2021 Bulletin 2021/08**

(51) Int Cl.:
*G09C 5/00* (2006.01)        *G06F 16/22* (2019.01)
*H04L 9/32* (2006.01)

(21) Application number: **14858153.1**

(22) Date of filing: **28.10.2014**

(86) International application number:
**PCT/IB2014/065654**

(87) International publication number:
**WO 2015/063677 (07.05.2015 Gazette 2015/18)**

(54) **INFORMATION BEARING DEVICES AND AUTHENTICATION DEVICES INCLUDING SAME**

DATENTRÄGERVORRICHTUNGEN UND AUTHENTIFIZIERUNGSVORRICHTUNGEN DAMIT

DISPOSITIFS PORTEURS D'INFORMATIONS ET DISPOSITIFS D'AUTHENTIFICATION LES INTÉGRANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2013 HK 13112108**

(43) Date of publication of application:
**07.09.2016 Bulletin 2016/36**

(73) Proprietor: **Polly Industries Limited**
**Kwun Tong, Kowloon**
**Hong Kong (CN)**

(72) Inventors:
• **LAM, Wing Hong**
**Hong Kong (CN)**
• **LAU, Tak Wai**
**Hong Kong (CN)**

(74) Representative: **Higgs, Jonathan et al**
**Urquhart-Dykes & Lord LLP**
**Altius House**
**1 North Fourth Street**
**Milton Keynes MK9 1DG (GB)**

(56) References cited:
WO-A1-2006/049430        CN-A- 101 436 954
CN-A- 102 143 200         CN-U- 203 204 631
US-A1- 2002 179 717       US-A1- 2011 259 962

**Description**

*Field*

The present invention relates to information bearing devices and authentication devices comprising same.

*Background*

Information bearing device are widely used to carry coded or un-coded embedded messages. Such messages may be used for delivering machine readable information or for performing security purposes such as for combatting counterfeiting. Many known information bearing devices containing embedded security messages are coded or encrypted using conventional schemes and such coding or encryption schemes can be easily reversed once the coding or encryption schemes are known. US2011/0259962 discloses a method of creating an image of a Data Matrix incorporating digital authentication codes ("DAC"). Each of the DAC's element are determined by using a DAC generation algorithm, based on one or several messages, one or more keys, a physical size of Data Matrix and a print resolution. US2002/0179717 discloses a spread spectrum barcode methodology, wherein user data are modulated in a distributed fashion across a data bearing barcode image. Fiducial data may be modulated and distributed across the data bearing barcode to facilitate correction of distortions.

*Summary*

An information bearing device comprising a data bearing pattern has been disclosed according to claim 1. The data bearing pattern comprises M × N pattern defining elements which are arranged to define a set of characteristic spatial distribution properties $(\hat{I}_{u,v}^{M,N}(x,y))$. The set of data comprises a plurality of discrete data and each said discrete data $(D_i(u_i, v_i))$ has an associated data bearing pattern which is characteristic of said discrete data, and the set of characteristic spatial distribution properties is due to the associated data bearing patterns of said plurality of discrete data. Said discrete data and the associated data bearing pattern of said discrete data is related by a characteristic relation function $(\beta_k^{u,v}(x,y))$, The characteristic relation function defining spatial distribution properties of said associated data bearing pattern according to said discrete data $(D_i(u_i,v_i))$ and a characteristic parameter $(k)$ that is independent of said discrete data.

In some embodiments, the data bearing pattern comprises $M \times N$ pattern defining elements which are arranged to define a set of characteristic spatial distribution properties $(\hat{I}_{u,v}^{M,N}(x,y))$.. The set of data comprises at least one discrete data $(u_i,v_i)$. Said discrete data has an associated data bearing pattern which is characteristic of said discrete data. Said discrete data and the associated data bearing pattern of said discrete data is related by a characteristic relation function $(\beta_k^{u,v}(x,y))$, The characteristic relation function defines spatial distribution properties of said associated data bearing pattern according to said discrete data $(u_i, v_i)$ and a characteristic parameter $(k)$ that is independent of said discrete data.

In some embodiments, the data bearing pattern comprises pattern defining elements arranged into $M$ rows along a first spatial direction $(x)$ and $N$ columns along a second spatial direction $(y)$. The relation function $(\beta_k^{u,v}(x,y))$, may have a monotonous trend of change of spatial distribution properties in each spatial direction.

In some embodiments, the set of data comprises a plurality of discrete data and the relation functions $([\beta_k^{u,v}(x,y)])$ of said plurality of discrete data are linearly independent.

There is disclosed a method of forming an information bearing device, the information bearing device comprising a data bearing pattern having a set of characteristic spatial distribution properties $(\hat{I}_{u,v}^{M,N}(x,y))$. The method comprises processing a set of data comprising a plurality of discrete data by a corresponding plurality of relation functions $([\beta_k^{u,v}(x,y)])$ to form the data bearing pattern, wherein the relation functions are linearly independent and each relation function $(\beta_k^{u,v}(x,y))$, relates a discrete data $(u_i, v_i)$ to a data bearing pattern having a set of spatial distribution properties characteristic of said discrete data. The spatial distribution characteristics of said data bearing pattern is dependent on a characteristic parameter that is independent of said discrete data.

In some embodiments, the data bearing pattern comprises $M \times N$ pattern defining elements and the method comprises including a maximum of $M \times N$ relation functions $[\beta_k^{u,v}(x,y)]$ to define a maximum of $M \times N$ data bearing patterns to form said data bearing pattern, wherein each one of said the $M \times N$ data bearing patterns has a set of characteristic spatial distribution properties that is specific to said discrete data$(u_i, v_i)$.

*Figures*

The disclosure will be described by way of example with reference to the accompanying Figures, in which:

Figure 1 shows an example information bearing device according to the disclosure,

Figure 1A shows an example information bearing device according to the disclosure,

Figure 1B shows an example information bearing device according to the disclosure,

Figure 1C shows an example information bearing device according to the disclosure,

Figure 2 shows an example information bearing device according to the disclosure,

Figure 2A shows an example information bearing device according to the disclosure,

Figure 2B shows an example information bearing device according to the disclosure,

Figure 3 shows an example information bearing device according to the disclosure,

Figure 4 shows an example information bearing device according to the disclosure,

Figure 5 shows an example information bearing device according to the disclosure,

Figure 6 shows an example information bearing device according to the disclosure, and

Figure 7 shows an example information bearing device according to the disclosure.

***Description***

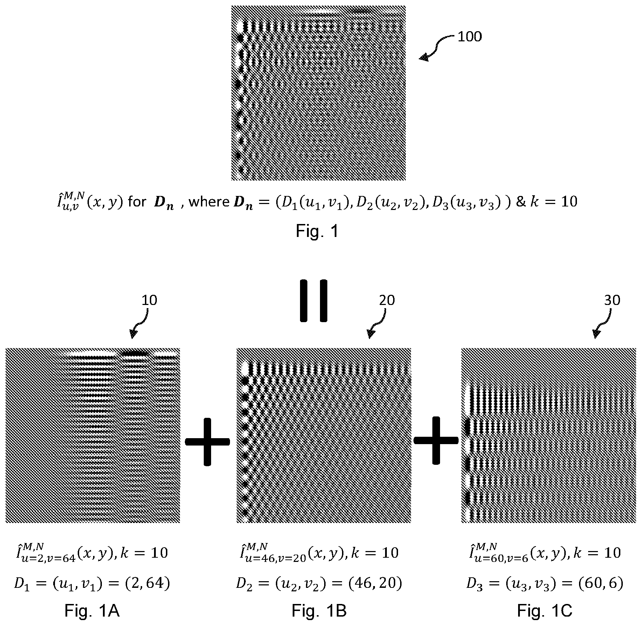

An example information bearing device depicted in Figure 1 comprises a data bearing pattern **100.** The data bearing pattern **100** comprises $(N \times M)$ pattern defining elements which are arranged in a display matrix comprising $N$ rows and $M$ columns of pixels or pixel elements, where $N = M = 256$ in this example. Each pixel element can be 8-bit grey-scale coded to have a maximum of 256 grey levels, ranging from 0-255. This data bearing pattern has been encoded with an example set of data $D_n$, where n represents the number of discrete data which is 3 in the present example, and $D_n$ comprises $D_1$, $D_2$, $D_3$. Each of the discrete data $D_1$, $D_2$, $D_3$ comprises a two-dimensional variable $(u_i, v_i)$ having a first component ($u_i$ or '$u$'-component) in a first axis, say $u$-axis and a second component ($v_i$ or '$v$'-component) in a second axis, say $v$-axis, the second axis being orthogonal to the first axis.

Each discrete data may be represented by the mathematical expression below,

$$D_i(u, v) = \begin{cases} A_i & u = u_i \text{ and } v = v_i \\ 0 & \text{otherwise} \end{cases},$$

where
$A_i$ is an amplitude parameter representing intensity strength of the data. The values of $A_i$ may be adjusted for each discrete data without loss of generality and are set to 1 as a convenient example. Each discrete data $D_i$ may be denoted by its components $u_i$, $v_i$ in the data domain and the example discrete data have the following example values:

| $D_i$ | $D_1$ | $D_2$ | $D_3$ |
|---|---|---|---|
| $(u_i, v_i)$ | (2,64) | (46,20) | (60,6) |

The example data bearing pattern 100 can be regarded as a linear combination or a linear superimposition of three data bearing patterns. The three data bearing patterns are respectively due to $D_1, D_2, D_3$ and the data bearing patterns due to the individual data $D_1, D_2, D_3$ are depicted respectively in Figures 1A, 1B and 1C.

The data bearing pattern 10 of Figure 1A is due to data $D_1$. This data bearing pattern 10 is representable by an expression $\hat{I}_{u_1,v_1}^{M,N}(x, y)$, where $u_1$ and $v_1$ are component values of $D_1$ expressible as a two-dimensional data ($u_1$, $v_1$). In this example, $u_1 = 2$, $v_1 = 64$ and an expression $\hat{I}_{u1,v1}^{M,N}(x, y)$ contains unique spatial distribution properties of the data bearing pattern 10 in the form of grey-level of each pixel element in the matrix of ($N \times M$) pixel elements.

The relationship between the spatial image expression $\hat{I}_{u,v}^{M,N}(x, y)$ and a set of data, $D$ comprising an integer of $n$ discrete 2-dimensional data, namely, $D = ((u_1,v_1), (u_2,v2_1), ..., (u_n,v_n))$ can be generally expressed as follows:

$$\sum_{m=1}^{M}\sum_{n=1}^{N} \beta_k^{m,n}(x,y)\left\{\sum_i D_i(m,n)\right\} \qquad \text{............ (E100)}$$

Where $\beta_k^{u,v}(x, y)$ is a relation function relating the discrete data ($u_i,v_i$) to a set of spatial distribution properties as defined by the spatial image expression $\hat{I}_{u,v}^{M,N}(x, y)$ and the spatial distribution properties are further determined by the parameter $k$.

For the example device of Figure 1, a modified Bessel function of order $k$ as below is used as an example relation function:-

$$\beta_k^{u,v}(x,y) = \frac{4}{\alpha_{k,M+1}\alpha_{k,N+1}} \frac{J_k\left(\frac{\alpha_{k,u}\alpha_{k,x}}{\alpha_{k,M+1}}\right)J_k\left(\frac{\alpha_{k,v}\alpha_{k,y}}{\alpha_{k,N+1}}\right)}{|J_{k+1}(\alpha_{k,u})||J_{k+1}(\alpha_{k,x})||J_{k+1}(\alpha_{k,v})||J_{k+1}(\alpha_{k,y})|},$$

where

$J_k\left(\frac{\alpha_{k,u}\alpha_{k,x}}{\alpha_{k,M+1}}\right)$ is an elementary relation function for variable $x$ and has a predetermined key $k$, where $x = 1$ to $M$,

$J_k\left(\frac{\alpha_{k,v}\alpha_{k,y}}{\alpha_{k,N+1}}\right)$ is an elementary relation function for variable $y$ having the same key $k$, where y = 1 to N, and

$J_k(r) = \sum_{i=0}^{\infty}\frac{(-1)^i}{i!\Gamma(i+k+1)}\left(\frac{r}{2}\right)^{2i+k}$ is a Bessel function of the first kind, $\alpha_{k,i}$ being the $i$-th root of Bessel function of the first kind of order k, and $\Gamma$ is a gamma function.

Where there is a single discrete data ($u_i$, $v_i$), the expression $\hat{I}_{u_i,v_i}^{M,N}(x, y)$ above will boil down to a single relation function $\beta_k^{u_i,v_i}(x, y)$ having properties distributed in two spatial dimensions, namely, 'x -' dimension and 'y -' dimension. Therefore, for each single discrete data($u_i,v_i$), there is a corresponding characteristic function with properties or characteristics of which are spread, scattered or distributed throughout or around the data bearing pattern **100** which comprises $NxM$ image defining elements. As each expression $\beta_k^{u_i,v_i}(x, y)$ is characteristic or definitive of the spatial properties of an data bearing pattern corresponding to a single discrete data ($u_i$, $v_i$), $\beta_k^{u_i,v_i}(x, y)$ can be considered as a characteristic two-dimensional relation function relating or co-relating a single discrete data to an image pattern having a set of spatial distribution properties. Spatial distribution properties in the present context includes spatial variation properties between adjacent pixel elements, including separation between adjacent peak and trough coded pixel elements, separation between adjacent peak and peak and/or trough and trough coded pixel elements, trend of changes of pixel coding between adjacent peak and trough coded pixel elements, and other spatial properties. For example, where pixel elements are coded in grey scales, the coding will appear as intensity amplitude distribution. Where pixel elements are coded in colour, the coding will appear as different colours. A combination of colour and grey scale coding may be used without loss in generality.

As there is a characteristic two-dimensional ('2-D') relation function $\beta_k^{u_i,v_i}(x, y)$ corresponding to each single discrete data ($u_i,v_i$), and each characteristic two-dimensional function $\beta_k^{u_i,v_i}(x, y)$ corresponds to an image pattern, it follows that each single discrete data has a corresponding image pattern. Where the two-dimensional relation functions $\beta_k^{u_i,v_i}(x, y)$ are unique, no two relation functions will be identical, the image patterns are all unique and each image pattern has a specific corresponding correlation to a discrete data will have a unique correspondence with a corresponding data. As there are a total of $N \times M$ characteristic two-dimensional relation functions $\beta_k^{u,v}(x,y)$, a maximum of $N \times M$ discrete data can be represented by the image pattern corresponding to the expression $\hat{I}_{u,v}^{M,N}(x,y)$.

Where the characteristic two-dimensional relation functions $\beta_k^{u,v}(x,y)$ have linear independence or are linearly independent, each single discrete data has a specific, unique or singular corresponding image pattern. With the relation functions $\beta_k^{u,v}(x,y)$ being linearly independent, the image pattern as represented by the expression $\hat{I}_{u,v}^{M,N}(x,y)$ can represent a maximum of $N \times M$ different discrete data.

The set of $N \times M$ relation functions comprises the following individual 2-D relation functions which are linearly independent:-

$$\{\beta_k^{1,1}(x,y), \beta_k^{1,2}(x,y), \dots, \beta_k^{1,N}(x,y), \beta_k^{2,1}(x,y), \beta_k^{2,2}(x,y), \dots, \beta_k^{2,N}(x,y), \dots, \beta_k^{M,1}(x,y), \beta_k^{M,2}(x,y), \dots, \beta_k^{M,N}(x,y)\}$$

Linearly independence of the 2-D relation functions $\beta_k^{u,v}(x,y)$ means that the 2-D relation functions $\beta_k^{u,v}(x,y)$ satisfy the following relationship: $\sum_{u=1}^{M} \sum_{v=1}^{N} a_{u,v} \beta_k^{u,v}(x,y) = 0$ if and only if $a_{1,1} = a_{1,2} = \dots = a_{M,N} = 0$

The 2-D relation functions $\beta_k^{u,v}(x,y)$ can be expressed as a product of two (one dimensional) 1-D elementary relation functions $\varepsilon_k^u(x)$ and $\varepsilon_k^v(y)$ such that $\beta_k^{u,v}(x,y) = \varepsilon_k^u(x)\,\varepsilon_k^v(y)$, in which for the example of Figure 1 (altered Bessel function),:-

$$\varepsilon_k^u(x) = \frac{2\,J_k\left(\frac{\alpha_{k,u}\alpha_{k,x}}{\alpha_{k,M+1}}\right)}{\alpha_{k,M+1}|J_{k+1}(\alpha_{k,u})||J_{k+1}(\alpha_{k,x})|} \text{ and } \varepsilon_k^v(y) = \frac{2\,J_k\left(\frac{\alpha_{k,v}\alpha_{k,y}}{\alpha_{k,N+1}}\right)}{\alpha_{k,N+1}|J_{k+1}(\alpha_{k,v})||J_{k+1}(\alpha_{k,y})|}$$

The 1-D elementary relation functions $\varepsilon_k^u(x)$ and $\varepsilon_k^v(y)$ are also linearly independent and satisfy the following relationships:

$$a_1 \varepsilon_k^{u=1}(x) + a_2 \varepsilon_k^{u=2}(x) + \dots + a_M \varepsilon_k^{u=M}(x) = 0$$

if and only if $a_1 = a_2 = \dots = a_M = 0$
and

$$a_1 \varepsilon_k^{v=1}(y) + a_2 \varepsilon_k^{v=2}(y) + \dots + a_N \varepsilon_k^{v=N}(y) = 0$$

if and only if $a_1 = a_2 = \dots = a_N = 0$.

The relationship between the image pattern $\hat{I}_{u,v}^{M,N}(x,y)$ and data, $D$ can be expressed in matrix form as follows:

$$\hat{I}_{u,v}^{M,N} = \widehat{R_{k,N}} I_{x,y}^{M,N} \widehat{R_{k,M}}, \qquad \dots\dots\dots\dots (E120)$$

Where $\hat{I}_{u,v}^{M,N}$ is a representation of the data, $D$, using data domain variables $u$, $v$,

$$\widehat{R_{k,M}} = \begin{bmatrix} \varepsilon_k(u=1, x=1) & \cdots & \varepsilon_k(u=1, x=M) \\ \vdots & \ddots & \vdots \\ \varepsilon_k(u=M, x=1) & \cdots & \varepsilon_k(u=M, x=M) \end{bmatrix},$$

and

$$\widehat{R_{k,N}} = \begin{bmatrix} \varepsilon_k(v=1, y=1) & \cdots & \varepsilon_k(v=1, y=N) \\ \vdots & \ddots & \vdots \\ \varepsilon_k(v=N, y=1) & \cdots & \varepsilon_k(v=N, y=N) \end{bmatrix}.$$

The 1-D elementary relation functions $\varepsilon_k^u(x)$ & $\varepsilon_k^v(y)$ in each column of same *x value* or each column of same y value, are linearly independent.

For computational efficiency, $\widehat{R_{k,M}}$ when arranged in matrix form comprises the following column vectors of same x values and row vector of same uvalues:-

$$\left\{ \begin{pmatrix} \varepsilon_k(u=1, x=1) \\ \vdots \\ \varepsilon_k(u=M, x=1) \end{pmatrix}, \begin{pmatrix} \varepsilon_k(u=1, x=2) \\ \vdots \\ \varepsilon_k(u=M, x=2) \end{pmatrix}, \dots, \begin{pmatrix} \varepsilon_k(u=1, x=M) \\ \vdots \\ \varepsilon_k(u=M, x=M) \end{pmatrix} \right\}$$

In the above matrix, the set of column vectors are linear independent, which means:

$$c_1 \begin{pmatrix} \varepsilon_k(1,1) \\ \vdots \\ \varepsilon_k(M,1) \end{pmatrix} + c_2 \begin{pmatrix} \varepsilon_k(1,2) \\ \vdots \\ \varepsilon_k(M,2) \end{pmatrix} + \dots + c_M \begin{pmatrix} \varepsilon_k(1,M) \\ \vdots \\ \varepsilon_k(M,M) \end{pmatrix} = 0$$

if and only if $c_1 = c_2 = \dots = c_M = 0$, and
$a_1\varepsilon_k(1,x) + a_2\varepsilon_k(2,x) + \dots + a_M\varepsilon_k(M,x) = 0$ if and only if $a_1 = a_2 = \dots = a_M = 0$.

Likewise, $\widehat{R_{k,N}}$ when arranged in matrix form comprises the following column vectors of same y values and row vectors of same *v* values:

$$\left\{ \begin{pmatrix} \varepsilon_k(v=1, y=1) \\ \vdots \\ \varepsilon_k(v=N, y=1) \end{pmatrix}, \begin{pmatrix} \varepsilon_k(v=1, y=2) \\ \vdots \\ \varepsilon_k(v=N, y=2) \end{pmatrix}, \dots, \begin{pmatrix} \varepsilon_k(v=1, y=N) \\ \vdots \\ \varepsilon_k(v=N, y=N) \end{pmatrix} \right\}$$

The column vectors of $\widehat{R_{k,N}}$ are also linearly independent.

Linear independence of the column vectors in the matrix expressions above means that every spatial image $\hat{I}_{u,v}^{M,N}$ having the above relationship would correspond to a unique data set **D**, and the corresponding unique data set in representation $I_{x,y}^{M,N}$ can be recovered by an inverse transform, for example, by reversing the relationship of E120 above as below: $I_{x,y}^{M,N} = \widehat{R_{k,N}}^{-1} \hat{I}_{u,v}^{M,N} \widehat{R_{k,M}}^{-1}$, where $\widehat{R_{k,M}}^{-1}$ is the inverse matrix of $\widehat{R_{k,M}}$ and $\widehat{R_{k,N}}^{-1}$ is the inverse matrix of $\widehat{R_{k,N}}$ ......... E140 E140

For example, where a plurality of discrete data is embedded in an image pattern $\hat{I}_{u,v}^{M,N}(x,y)$, the plurality of discrete data can be recovered by performing the following inverse transformation:

$$\sum_i D_i(u,v) = \frac{4}{\alpha_{k,M+1}\alpha_{k,N+1}} \sum_{x=1}^{M} \sum_{y=1}^{N} \frac{J_k\left(\frac{\alpha_{k,u}\alpha_{k,x}}{\alpha_{k,M+1}}\right) J_k\left(\frac{\alpha_{k,v}\alpha_{k,y}}{\alpha_{k,N+1}}\right)}{\left|J_{k+1}(\alpha_{k,u})\right|\left|J_{k+1}(\alpha_{k,x})\right|\left|J_{k+1}(\alpha_{k,v})\right|\left|J_{k+1}(\alpha_{k,y})\right|} \{\hat{I}_{u,v}^{M,N}(x,y)\}$$

To further enhance computational efficiency, the relation functions are mutually orthogonal, in which case the 2-D relation functions $\beta_k^{u,v}(x,y)$ has the following characteristics:

$$\sum_{u=1}^{M}\sum_{v=1}^{N}\beta_k^{u,v}(x,y)\beta_k^{u,v}(x',y') = \begin{cases} 1 & \text{if } x = x' \text{ and } y = y' \\ 0 & \text{otherwise} \end{cases}$$

In addition, the 1-D elementary relation functions $\varepsilon_k^u(x)$ & $\varepsilon_k^v(y)$ will have the following orthogonal characteristics:

$$\sum_{u=1}^{M}\varepsilon_k(u,x)\varepsilon_k(u,x') = \begin{cases} 1 & \text{if } x = x' \\ 0 & \text{if } x \neq x' \end{cases}$$

Where the relation functions are orthogonal, the forward and inverse transformations $\hat{I}_{u,v}^{M,N}(x,y)$ and $I_{x,y}^{M,N}(u,v)$ conserve total intensity.

In some embodiments, the 1-D elementary relation functions $\varepsilon_k^u(x)$ and $\varepsilon_k^v(y)$ may have different key parameters, $k$. For example, $\varepsilon_k^u(x)$ has $k = k_1$ and $\varepsilon_k^v(y)$ has $k = k_2$, in which case the set of discrete data may be recovered from an inverse transformation having the following expression:

$$\sum_i D_i(u,v) = \frac{4}{\alpha_{k1,M+1}\alpha_{k2,N+1}}\sum_{x=1}^{M}\sum_{y=1}^{N}\frac{J_{k1}\left(\frac{\alpha_{k1,u}\alpha_{k1,x}}{\alpha_{k1,M+1}}\right)J_{k2}\left(\frac{\alpha_{k2,v}\alpha_{k2,y}}{\alpha_{k2,N+1}}\right)}{|J_{k1+1}(\alpha_{k1,u})||J_{k1+1}(\alpha_{k1,x})||J_{k2+1}(\alpha_{k2,v})||J_{k2+1}(\alpha_{k2,y})|}\{\hat{I}_{u,v}^{M,N}(x,y)\}$$

In an example, the set of data **D** comprises a single discrete data $D_1$ only, with $D_1 = (u_1, v_1) = (2, 64)$, the representation $\hat{I}_{u,v}^{M,N}(x,y)$ will become $\hat{I}_{u1,v1}^{M,N}(x,y) = \hat{I}_{2,64}^{M,N}(x,y)$ and the expression:

$$\sum_{m=1}^{M}\sum_{n=1}^{N}\beta_k^{m,n}(x,y)\left\{\sum_i D_i(\text{m},\text{n})\right\}$$

will become:

$$\hat{I}_{u=2,v=64}^{M,N}(x,y) = \sum_{m=1}^{M}\sum_{n=1}^{N}\beta_k^{m,\text{n}}(x,y)\{D_1(\text{m},\text{n})\}$$

$$= \beta_k^{2,64}(x,y)$$

$$= G_k^{2,64}(x,y)J_k\left(\frac{\alpha_{k,2}\alpha_{k,x}}{\alpha_{k,257}}\right)J_k\left(\frac{\alpha_{k,64}\alpha_{k,y}}{\alpha_{k,257}}\right)$$

where $G_k^{2,64}(x,y) = \frac{4}{\alpha_{k,257}\alpha_{k,257}|J_{k+1}(\alpha_{k,2})||J_{k+1}(\alpha_{k,x})||J_{k+1}(\alpha_{k,64})||J_{k+1}(\alpha_{k,y})|}$ is a normalising factor, and where

$J_k(r) = \sum_{i=0}^{\infty}\frac{(-1)^i}{i!\Gamma(i+k+1)}\left(\frac{r}{2}\right)^{2i+k}$ and $\alpha_{k,j}$ is a root of Bessel function and k is order of the Bessel function.

Therefore, the data bearing pattern 10 of Figure 1A as represented by the expression $\hat{I}_{u=2,v=64}^{M,N}(x,y)$ has a unique corresponding representation in the form of: $G_k^{2,64}(x,y)J_k\left(\frac{\alpha_{k,2}\alpha_{k,x}}{\alpha_{k,257}}\right)J_k\left(\frac{\alpha_{k,64}\alpha_{k,y}}{\alpha_{k,257}}\right)$ for k= 10.

Similarly, where the set of data **D** comprises a single discrete data $D_2$ and $D_2 = (u_2, v_2) = (46, 20)$, the repre-

sentation $\hat{I}_{u,v}^{M,N}(x,y)$ of the data bearing pattern 20 of Figure 1B will become $\hat{I}_{u2,v2}^{M,N}(x,y)=\hat{I}_{46,20}^{M,N}(x,y)$ and the unique corresponding representation will be in the form of $G_k^{46,20}(x,y)\,J_k\left(\frac{\alpha_{k,46}\alpha_{k,x}}{\alpha_{k,257}}\right)J_k\left(\frac{\alpha_{k,20}\alpha_{k,y}}{\alpha_{k,257}}\right)$ for k=10.

Likewise, where the set of data **D** comprises a single discrete data $D_3$ and $D_3 = (u_3,v_3) = (60,6)$, the representation $\hat{I}_{u,v}^{M,N}(x,y)$ of the data bearing pattern 30 of Figure 1C will become $\hat{I}_{u3,v3}^{M,N}(x,y)=\hat{I}_{60,6}^{M,N}(x,y)$ and the unique corresponding representation will be in the form of $G_k^{60,6}(x,y)\,J_k\left(\frac{\alpha_{k,60}\alpha_{k,x}}{\alpha_{k,257}}\right)J_k\left(\frac{\alpha_{k,6}\alpha_{k,y}}{\alpha_{k,257}}\right)$ for k=10. for k=10.

Where the set of data **D** comprises 3 discrete data, namely, $D = (D_1, D_2, D_3)$, the expression $\hat{I}_{u,v}^{M,N}(x,y)$ of the data bearing pattern 100 of Figure 1 is due to the sum of the three corresponding expressions of the individual data, namely, $D_1$, $D_2$, and $D_3$.

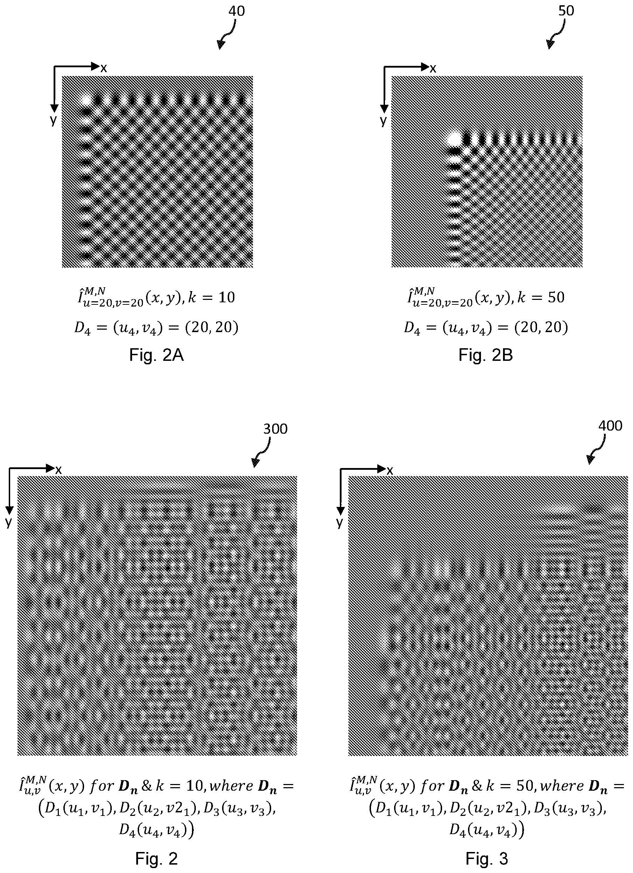

In another example, the set of data **D** further comprises another discrete data $D_4$, where $D_4 =(u_4, v_4) = (20,20)$. The data bearing pattern 300 having the expression $\hat{I}_{u,v}^{M,N}(x,y)$ as depicted in Figure 2 is due to the sum of the four corresponding expressions of the individual data, namely, $D_1$, $D_2$, $D_3$, and $D_4$ without loss of generality.

Where the set of data **D** comprises a single discrete data $D_4$, the spatial representation of the data bearing pattern $\hat{I}_{u,v}^{M,N}(x,y)$ will become $\hat{I}_{u4,v4}^{M,N}(x,y)=\hat{I}_{20,20}^{M,N}(x,y)$ and the unique corresponding representation will be in the form of $G_k^{20,20}(x,y)\,J_k\left(\frac{\alpha_{k,20}\alpha_{k,x}}{\alpha_{k,257}}\right)J_k\left(\frac{\alpha_{k,20}\alpha_{k,y}}{\alpha_{k,257}}\right)$. When the order k is 10, the data bearing pattern will be as depicted in Figure 2A. As depicted in Figure 2B, when the order k is changed to 50, the data bearing pattern will have its appearance changed even though the data remains the same as $D_4(20,20)$.

Where k is changed to 50, the data bearing pattern 400 for the set of discrete data $D_1$, $D_2$, $D_3$, and $D_4$ is as depicted in Figure 3, showing a different set of spatial distribution properties.

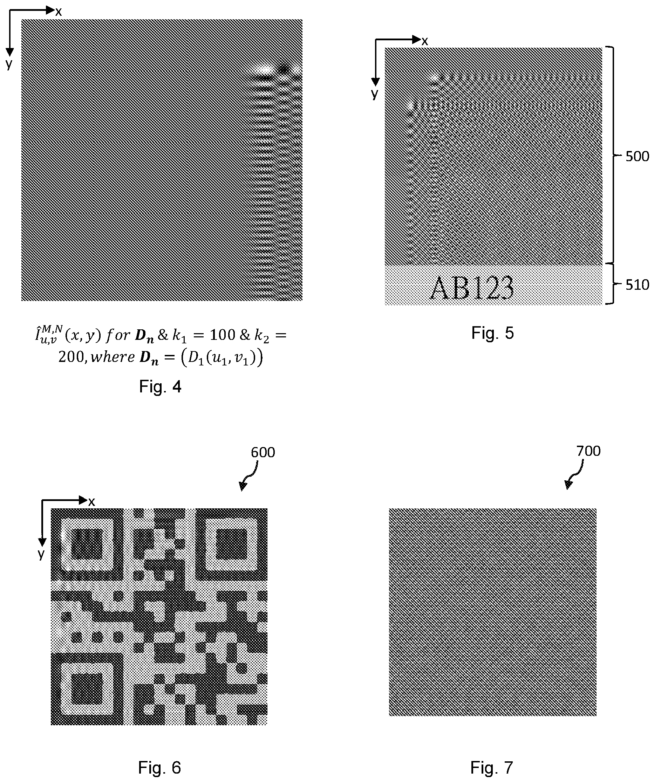

In the example information bearing device as depicted in Figure 4, the example data bearing pattern is obtained by processing data $D_1$ with $k_1$ = 100 and $k_2$ = 200.

Where an image pattern has a resolution of $(N \times M)$ pixel elements arranged into $N$ rows and $M$ columns, the image pattern can have a total of $L^{(N \times M)}$ number of possible pattern variations, where $L$ is the possible variation of each pixel element. For an image pattern of $(N \times M)$ pixel elements where each pixel element has a maximum variations of 256 grey scale levels, namely, from 0 to 255, $L$ = 256.

From the equation $\hat{I}_{u,v}^{M,N}(x,y) = \sum_{u=1}^{M}\sum_{v=1}^{N}\beta_k^{u,v}(x,y)\left\{\sum_i D_i(u,v)\right\}$ above, it will be noted that the function $\beta_k^{u,v}(x,y)$ comprises a plurality of relation functions $\beta_k^{u_i,v_i}(x,y)$, where $1 \le u_i \le M$ and $1 \le v_i \le N$. Each of the relation functions $\beta_k^{u_i,v_i}(x,y)$ has the effect of spreading or scattering a discrete data $(u_i, v_i)$ into an image pattern of $(N \times M)$ pixel elements the spatial distribution characteristic of which is characteristic of the discrete data $(u_i, v_i)$ and the specific relation function $\beta_k^{u_i,v_i}(x,y)$. As there are a total of $N \times M$ relation functions $\beta_k^{u_i,v_i}(x,y)$, a maximum of $N \times M$ discrete data can be represented by an image pattern of $(N \times M)$ pixel elements where each of the relation functions $\beta_k^{u_i,v_i}(x,y)$ is unique. Even if the relation functions are known, recovery or reverse identification of the actual data still require a correct key $k$.

A captured image of an example information bearing device formed on a printed tag is depicted in Figure 5. The example information bearing device comprises an example data bearing pattern 500 and a set of key information bearing device 510. The data bearing pattern 500 was previously processed by the transformation process of **E120** to convert a set of discrete data into the data bearing pattern 500 which carries a set of spatial distribution properties that is characteristic of the set of discrete data. The key information bearing device 510 comprises the set of image corresponding to 'AB123' which is printed underneath the data bearing pattern 500. To retrieve data embedded in the data bearing pattern 500, the message 'AB123' is recovered from the image, for example, by optical character recognition, and the related parameter (k) will be retrieved, for example, from databases relating the message to the parameter (k) as depicted in the table below.

Table 1

| Message | 111 | 110 | 101 | AB123 | ... |
|---|---|---|---|---|---|
| Parameter (k) | 100 | 51 | 312 | 100 | ... |

The data bearing pattern 500 is resized into $M \times N$ pixels and reverse transformation process **E140** is performed on the resized image to recover the set of data.

A captured image of an example information bearing device formed on a printed tag is depicted in Figure 6. The example information bearing device comprises an example data bearing pattern 600 and a set of key information bearing device. The data bearing pattern 600 was previously processed by the transformation process of **E120** to convert a set of discrete data into the data bearing pattern 600 which carries a set of spatial distribution properties that is characteristic of the set of discrete data. The key information bearing device comprises a set of key data '111' which was also encoded on the information bearing device, albeit using a different coding scheme. In this example, the key data '111' was encoded in a format known as 'QR'™ code.

To retrieve data embedded in the data bearing pattern 600, the message '111' is recovered from the image, and the related parameter (k) will be retrieved, for example, from databases relating the message to the parameter (k) as depicted in Table 1 above.

Likewise, the data bearing pattern 600 is resized into $M \times N$ pixels and reverse transformation process **E140** is performed on the resized image to recover the set of data.

A captured image of an example information bearing device formed on a printed tag is depicted in Figure 7. The example information bearing device comprises an example data bearing pattern 700 and a set of key information bearing device. The data bearing pattern 700 was previously processed by the transformation process of **E120** to convert a set of discrete data into the data bearing pattern 700 which carries a set of spatial distribution properties that is characteristic of the set of discrete data. The key information bearing device comprises a set of key parameter '111' which was also encoded on the information bearing device, albeit using a Fourier coding scheme.

To recover the key parameter, inverse Fourier transform is performed and the key parameter thus obtained is utilised to recover the set of discrete data after resizing the information bearing pattern 700 into $M \times N$ pixels and then to perform the reverse transformation process **E140.**

In the above examples, Bessel function of the first kind is used as it has an effect of spreading a discrete data into a set of distributed image elements such as a set of continuously distributed image elements as depicted in Figures 1A to 2B. Another advantage of the Bessel function is its key dependence, so that the amplitude intensity distribution is variable and dependent on a key $k$.

While Bessel function of the first kind has been used as example above, it would be appreciated that other functions that can spread a discrete data point into a set of distributed image elements and the characteristics of the set of distributed image elements can be further carried by a preselected key would also be suitable. Hankel function and Riccati-Bessel function etc. are other suitable examples to form transformation functions.

While the term 'spread' has been used in this disclosure since the effect of the transformation is akin to the function of a 'point spreading function', such a term has been used in a non-limiting manner to mean that a discrete data is transformed into a set of distributed image elements. In general, a suitable transformation function would be one that could operate to represent a discrete data symbol such as data symbols ($u_i$, $v_i$) above with information or coding spread in the spatial domain. While spreading functions having aperiodic properties in their spatial domain distribution or spread have been described above, it would be understood by persons skilled in the art that functions having periodic properties in their spatial domain distribution or spread that are operable with a key for coding would also be used without loss of generality.

**Claims**

1. An information bearing device comprising a data bearing pattern, the data bearing pattern (100, 300, 400, 500, 600, 700) having been encoded or embedded with a set of data and comprising $M \times N$ pattern defining elements which are arranged to define a set of characteristic spatial distribution properties $(\hat{I}_{u,v}^{M,N}(x,y))$, wherein the set of data comprises at least one discrete data ($D_i(u_i, v_i)$), and said discrete data has an associated data bearing pattern (10, 20, 30) which is characteristic of said discrete data, wherein said discrete data and the associated data bearing pattern of said discrete data are related by a characteristic relation function $(\beta_k^{u,v}(x,y))$, the characteristic relation function being a transformation function defining spatial distribution properties of said associated data bearing pattern according to said discrete data ($D_i(u_i, v_i)$) and a characteristic parameter ($k$) that is independent of said discrete data, and wherein properties or characteristics of the characteristic relation function are spread, scattered or distributed throughout the data bearing pattern, wherein the characteristic relation function has effect of spreading or scattering a discrete data into the data defining elements of the data bearing pattern; or wherein the characteristic relation function is to operate to represent a discrete data with information or coding spread in spatial domain.

2. An information bearing device according Claim 1, wherein the discrete data is recoverable by performing inverse transformation utilizing the characteristic parameter (k) which is a key parameter; and/or wherein the transformation function is a point spreading function that can spread a discrete data into the pattern defining elements and the spatial distribution properties of said data bearing pattern (100, 300, 400, 500, 600, 700) are dependent on a characteristic parameter; and the pattern defining elements are grey scale coded, colour coded, or both colour and grey scale; wherein when the pattern defining elements are grey scale coded, the coding appears as intensity amplitude distribution; and wherein when the pattern defining elements are colour coded, the coding appears as different colour.

3. An information bearing device according to Claims 1 or 2, wherein the characteristic relation function is a two dimensional transformation function $\beta_k^{u,v}(x,y)$, expressable as a product of two one-dimensional elementary relation functions, $\varepsilon_k^u(x)$ and $\varepsilon_k^v(y)$, such that $\beta_k^{u,v}(x,y) = \varepsilon_k^u(x)\,\varepsilon_k^v(y)$; wherein $u, v$ is a two-dimensional variable having a first component $u$ on a first axis or u-axis and a second component $v$ on a second axis or v-axis orthogonal to the first axis, $k$ is the characteristic parameter; wherein $x$ defines a first spatial direction and y defines a second spatial direction; and wherein the two one-dimensional elementary relation functions are linearly independent.

4. An information bearing device according to any one of the preceding Claims, wherein the set of data comprises a plurality of discrete data, and each said discrete data $D_i(u_i, v_i)$ has a corresponding two-dimensional characteristic relation function $\beta_k^{u_i,v_i}(x,y)$ and an associated data bearing pattern (10, 20, 30) which is characteristic of said discrete data, and the set of characteristic spatial distribution properties is due to the corresponding data bearing patterns of said plurality of discrete data; wherein the data bearing pattern comprises pattern defining elements arranged into M rows along a first spatial direction ($x$) and $N$ columns along a second spatial direction ($y$); and wherein the characteristic relation functions of the plurality of discrete data are linearly independent and each discrete data has a specific, unique or single corresponding data bearing pattern.

5. An information bearing device according to any one of the preceding Claims, wherein the set of data **D** comprises a plurality of 2-dimensional discrete data, wherein the data bearing pattern (100, 300, 400, 500, 600, 700) has spatial distribution properties representable by $\hat{I}_{u,v}^{M,N}(x,y)$, where

$$\hat{I}_{u,v}^{M,N}(x,y) = \sum_{m=1}^{M} \sum_{n=1}^{N} \beta_k^{m,n}(x,y)\left\{\sum_i D_i(\mathrm{m,n})\right\}.$$

6. An information bearing device according to Claim 5 when depending on claim 3, wherein the expression relates to the set of data by the relationship: $\hat{I}_{u,v}^{M,N}(x,y) = \widehat{R_{k,N}} I_{x,y}^{M,N} \widehat{R_{k,M}}$, wherein

$$\widehat{R_{k,M}} = \begin{bmatrix} \varepsilon_k(u=1,x=1) & \cdots & \varepsilon_k(u=1,x=M) \\ \vdots & \ddots & \vdots \\ \varepsilon_k(u=M,x=1) & \cdots & \varepsilon_k(u=M,x=M) \end{bmatrix}, \text{ and}$$

$$\widehat{R_{k,N}} = \begin{bmatrix} \varepsilon_k(v=1,y=1) & \cdots & \varepsilon_k(v=1,y=N) \\ \vdots & \ddots & \vdots \\ \varepsilon_k(v=N,y=1) & \cdots & \varepsilon_k(v=N,y=N) \end{bmatrix}.$$

7. An information bearing device according to any one of the preceding Claims, wherein the characteristic relation function is a two-dimensional Bessel function of the first kind and order $k$, $k$ being the characteristic parameter, a Hankel function, or a Riccati-Bessel function.

8. A method of forming an information bearing device, the information bearing device comprising a data bearing pattern (100, 300, 400, 500, 600, 700) having a set of characteristic spatial distribution properties $(\hat{I}_{u,v}^{M,N}(x,y))$, the method comprises:-

- processing a set of data comprising a plurality of discrete data by a corresponding plurality of relation functions $(\beta_k^{u,v}(x,y))$ to form the data bearing pattern, wherein the relation functions are linearly independent transformation functions and each relation function $(\beta_k^{u,v}(x,y))$ relates a discrete data $(u_i, v_i)$ to a data bearing pattern having a set of spatial distribution properties characteristic of said discrete data, and

- wherein each of the relation functions is a transformation function which defines spatial distribution properties of said data bearing pattern according to said discrete data $(u_i, v_i)$ and a characteristic parameter $(k)$ that is independent of said discrete data, and spatial distribution characteristics of said data bearing pattern is dependent on a characteristic parameter that is independent of said discrete data, and the discrete data is recoverable by inverse transformation utilizing the a characteristic parameter $(k)$ as a key parameter; and

wherein properties or characteristics of the characteristic relation function are spread, scattered or distributed throughout the data bearing pattern, wherein the characteristic relation functions has the effect of spreading or scattering a discrete data into the data defining elements of data bearing pattern; or wherein the characteristic relation function is to operate to represent a discrete data with information or coding spread in the spatial domain.

9. A method according to Claim 8, wherein the data bearing pattern (100, 300, 400, 500, 600, 700) comprises $M \times N$ pattern defining elements and the method comprises including a maximum of $M \times N$ relation functions $(\beta_k^{u,v}(x,y))$ to define a maximum of $M \times N$ data bearing patterns to form said data bearing pattern, wherein each one of said the $M \times N$ data bearing patterns has a set of characteristic spatial distribution properties that is specific to said discrete data$(u_i, v_i)$.

10. A method according to Claims 8 or 9 or an information bearing device according to any one of Claims 1 to 7, wherein said relation function, expressed as $\beta_{k_1,k_2}^{u_i,v_i}(x,y)$, comprises a first elementary relation function $\varepsilon_{k_1}^{u_i}(x)$ and a second elementary relation function $\varepsilon_{k_2}^{v_i}(y)$, such that $\beta_{k_1,k_2}^{u_i,v_i}(x,y) = \varepsilon_{k_1}^{u_i}(x)\varepsilon_{k_2}^{v_i}(y)$ and wherein the first elementary relation function $\varepsilon_{k_1}^{u_i}(x)$ is to relate a first component $u_i$ of a discrete data in a first data domain to a set of spatial distribution properties in a first spatial domain $x$ according to a first characteristic parameter component $k_1$, and the second elementary relation function $\varepsilon_{k_2}^{v_i}(y)$ (y) is to relate a second component $v_i$ of the discrete data $(u_i, v_i)$ in a second data domain orthogonal to the first data domain to a set of spatial distribution properties in a second spatial domain y orthogonal to the first spatial domain according to a second characteristic parameter component $k_2$; and/or wherein the first characteristic parameter component $k_1$ and the second characteristic parameter component $k_2$ are equal.

11. A method or an information bearing device according to any preceding Claim, wherein the data bearing pattern (100, 300, 400, 500, 600, 700) comprises pattern defining elements arranged into $M$ rows along a first spatial direction $(x)$ and $N$ columns along a second spatial direction $(y)$, and wherein the relation function is express-able as a product of first and second elementary relation functions $(\varepsilon_{k_1}^{u}(x)\ \varepsilon_{k_2}^{v}(y))$, $k_1, k_2$ being orders of the elementary relation functions $(\varepsilon_{k_1}^{u}(x)\ \&\ \varepsilon_{k_2}^{v}(y))$.

12. An information bearing device according to Claim 7, wherein $a_1\varepsilon_{k_1}^{u=1}(x) + a_2\varepsilon_{k_1}^{u=2}(x) + \cdots + a_M\varepsilon_{k_1}^{u=M}(x) = 0$ if and only if $a_1 = a_2 = \cdots = a_M = 0$; and/or wherein $a_1\varepsilon_{k_2}^{v=1}(y) + a_2\varepsilon_{k_2}^{v=2}(y) + \cdots + a_N\varepsilon_{k_2}^{v=N}(y) = 0$ if and only if $a_1 = a_2 = \cdots = a_N = 0$, and wherein $\varepsilon_{k_1}^{u}(x)$ is the first elementary relation function and $\&\ \varepsilon_{k_2}^{v}(y)$ is the second elementary relation function, and $k_1, k_2$ orders of the elementary relation functions.

13. An information bearing device according to Claim 7, wherein the first elementary relation function is expressable as $\varepsilon_{k_1}^{u}(x)$ and the second elementary relation function is expressable as $\varepsilon_{k_2}^{v}(y)$, and where the first and second elementary relation functions are linearly independent and satisfy:

$$\sum_{u=1}^{M} \varepsilon_{k_1}^{u}(x)\varepsilon_{k_1}^{u}(x') = \begin{cases} 1 & \text{if } x = x' \\ 0 & \text{if } x \neq x' \end{cases}$$

14. An authentication device comprising an information bearing device according to any one of Claims 1 to 7.

15. An authentication device according to Claim 14, wherein the relation function comprises a two-dimensional Bessel function of order $k$; and/or further including information relating to said characteristic parameter ($k$).

**Patentansprüche**

1. Informationstragende Vorrichtung, die ein datentragendes Muster umfasst, wobei das datentragende Muster (100, 300, 400, 500, 600, 700) mit einem Datensatz encodiert oder eingebettet wurde und $M$ x $N$ musterdefinierende Elemente umfasst, die zum Definieren eines Satzes von charakteristischen räumlichen Verteilungseigenschaften ($\hat{I}_{u,v}^{M,N}(x,y)$) ausgelegt sind, wobei der Datensatz mindestens ein diskretes Datenelement ($D_i(u_i, v_i)$) umfasst und das genannte diskrete Datenelement ein assoziiertes datentragendes Muster (10, 20, 30) hat, das für das genannte diskrete Datenelement charakteristisch ist, wobei das genannte diskrete Datenelement und das assoziierte datentragende Muster des genannten diskreten Datenelements durch eine charakteristische Relationsfunktion ($\beta_k^{u,v}(x,y)$) in Beziehung stehen, wobei die charakteristische Relationsfunktion eine Transformationsfunktion ist, die räumliche Verteilungseigenschaften des genannten assoziierten datentragenden Musters gemäß dem genannten diskreten Datenelement ($D_i(u_i, v_i)$) und einem charakteristischen Parameter (k) definiert, der von dem genannten diskreten Datenelement unabhängig ist, und wobei Eigenschaften oder Charakteristika der charakteristischen Relationsfunktion über das datentragende Muster verbreitet, gestreut oder verteilt sind, wobei die charakteristische Relationsfunktion die Wirkung hat, diskrete Datenelemente in die datendefinierenden Elemente des datentragenden Musters zu verbreiten oder zu streuen; oder wobei die charakteristische Relationsfunktion die Aufgabe hat, ein diskretes Datenelement mit in der Raumdomäne verbreiteten Informationen oder Codierungen darzustellen.

2. Informationstragende Vorrichtung nach Anspruch 1, wobei das diskrete Datenelement durch Ausführen einer inversen Transformation anhand des charakteristischen Parameters (k), der ein Schlüsselparameter ist, wiederherstellbar ist; und/oder wobei die Transformationsfunktion eine Punktverbreitungsfunktion ist, die diskrete Datenelemente in die musterdefinierenden Elemente verbreiten kann und die räumlichen Verteilungseigenschaften des genannten datentragenden Musters (100, 300, 400, 500, 600, 700) von einem charakteristischen Parameter abhängig sind; und die musterdefinierenden Elemente graustufencodiert, farbcodiert oder sowohl farb- als auch graustufencodiert sind; wobei, wenn die musterdefinierenden Elemente graustufencodiert sind, die Codierung als Intensitätsamplitudenverteilung erscheint; und wobei, wenn die musterdefinierenden Elemente farbcodiert sind, die Codierung als andere Farbe erscheint.

3. Informationstragende Vorrichtung nach Anspruch 1 oder 2, wobei die charakteristische Relationsfunktion eine zweidimensionale Transformationsfunktion $\beta_k^{u,v}(x,y)$ ist, die als ein Produkt zweier eindimensionaler elementarer Relationsfunktionen, $\varepsilon_k^{u}(x)$ und $\varepsilon_k^{v}(y)$, ausgedrückt werden kann, so dass $\beta_k^{u,v}(x,y) = \varepsilon_k^{u}(x)\,\varepsilon_k^{v}(y)$ ist; wobei $u$, $v$ eine zweidimensionale Variable mit einer ersten Komponente $u$ auf einer ersten Achse oder $u$-Achse und einer zweiten Komponente $v$ auf einer zweiten Achse oder $v$-Achse orthogonal zur ersten Achse ist, $k$ der charakteristische Parameter ist; wobei $x$ eine erste Raumrichtung und $y$ eine zweite Raumrichtung definiert; und wobei die beiden eindimensionalen elementaren Relationsfunktionen linear unabhängig sind.

4. Informationstragende Vorrichtung nach einem der vorherigen Ansprüche, wobei der Datensatz mehrere diskrete Datenelemente umfasst und jedes genannte diskrete Datenelement $D_i(u_i, v_i)$ eine entsprechende zweidimensionale charakteristische Relationsfunktion $\beta_k^{u_i, v_i}(x,y)$ und ein assoziiertes datentragendes Muster (10, 20, 30) aufweist, das für die genannten diskreten Datenelemente charakteristisch ist, und der Satz von charakteristischen räumlichen Verteilungseigenschaften auf die entsprechenden datentragenden Muster der genannten mehreren diskreten Datenelemente zurückzuführen ist; wobei das datentragende Muster musterdefinierende Elemente umfasst, die in $M$ Reihen in einer ersten Raumrichtung ($x$) und $N$ Spalten in einer zweiten Raumrichtung ($y$) angeordnet sind; und wobei die charakteristischen Relationsfunktionen der mehreren diskreten Datenelemente linear unabhängig sind und jedes diskrete Datenelement ein spezifisches, einzigartiges oder einzelnes entsprechendes datentragendes Muster aufweist.

5. Informationstragende Vorrichtung nach einem der vorherigen Ansprüche, wobei der Datensatz **D** mehrere 2-dimensionale diskrete Datenelemente umfasst, wobei das datentragende Muster (100, 300, 400, 500, 600, 700) räumliche Verteilungseigenschaften aufweist, die durch $\hat{I}_{u,v}^{M,N}(x,y)$ darstellbar sind, wobei

$$\hat{I}_{u,v}^{M,N}(x,y) = \sum_{m=1}^{M}\sum_{n=1}^{N}\beta_k^{m,n}(x,y)\{\sum_i D_i(\mathrm{m},\mathrm{n})\} \text{ ist.}$$

6. Informationstragende Vorrichtung nach Anspruch 5 in Abhängigkeit von Anspruch 3, wobei der Ausdruck sich auf den Datensatz durch die Beziehung $\hat{I}_{u,v}^{M,N}(x,y) = \widehat{R_{k,N}}I_{x,y}^{M,N}\widehat{R_{k,M}}$ bezieht: wobei

$$\widehat{R_{k,M}} = \begin{bmatrix} \varepsilon_k(u=1,x=1) & \cdots & \varepsilon_k(u=1,x=M) \\ \vdots & \ddots & \vdots \\ \varepsilon_k(u=M,x=1) & \cdots & \varepsilon_k(u=M,x=M) \end{bmatrix},$$

und

$$\widehat{R_{k,N}} = \begin{bmatrix} \varepsilon_k(v=1,y=1) & \cdots & \varepsilon_k(v=1,y=N) \\ \vdots & \ddots & \vdots \\ \varepsilon_k(v=N,y=1) & \cdots & \varepsilon_k(v=N,y=N) \end{bmatrix}.$$

7. Informationstragende Vorrichtung nach einem der vorherigen Ansprüche, wobei die charakteristische Relationsfunktion eine zweidimensionale Besselfunktion der ersten Art und Ordnung $k$ ist, wobei $k$ der charakteristische Parameter, eine Hankel-Funktion oder eine Riccati-BesselFunktion ist.

8. Verfahren zum Bilden einer informationstragenden Vorrichtung, wobei die informationstragende Vorrichtung ein datentragendes Muster (100, 300, 400, 500, 600, 700) mit einem Satz von charakteristischen räumlichen Verteilungseigenschaften $(\hat{I}_{u,v}^{M,N}(x,y))$ umfasst, wobei das Verfahren Folgendes beinhaltet:

- Verarbeiten eines Datensatzes, der eine Mehrzahl von diskreten Datenelementen umfasst, durch eine entsprechende Mehrzahl von Relationsfunktionen $(\beta_k^{u,v}(x,y))$, um das datentragende Muster zu bilden, wobei die Relationsfunktionen linear unabhängige Transformationsfunktionen sind und jede Relationsfunktion $(\beta_k^{u,v}(x,y))$ ein diskretes Datenelement $(u_i, v_i)$ auf ein datentragendes Muster mit einem Satz von räumlichen Verteilungseigenschaften bezieht, die für die genannten diskreten Datenelemente charakteristisch sind, und
- wobei jede der Relationsfunktionen eine Transformationsfunktion ist, die räumliche Verteilungseigenschaften des genannten datentragenden Musters gemäß den genannten diskreten Datenelementen $(u_i, v_i)$ und einem charakteristischen Parameter (k) definiert, der unabhängig von dem genannten diskreten Datenelement ist, und räumliche Verteilungscharakteristika des genannten datentragenden Musters von einem charakteristischen Parameter abhängig sind, der unabhängig von dem genannten diskreten Datenelement ist, und das diskrete Datenelement durch inverse Transformation anhand des charakteristischen Parameters (k) als Schlüsselparameter wiederherstellbar ist; und

wobei Eigenschaften oder Charakteristika der charakteristischen Relationsfunktion über das datentragende Muster verbreitet, gestreut oder verteilt sind, wobei die charakteristische Relationsfunktion die Wirkung hat dass sie diskrete Datenelemente in die datendefinierenden Elemente des datentragenden Musters verbreitet oder streut; oder wobei die charakteristische Relationsfunktion die Aufgabe hat, ein diskretes Datenelement mit in der Raumdomäne verbreiteten Informationen oder Codierungen darzustellen.

9. Verfahren nach Anspruch 8, wobei das datentragende Muster (100, 300, 400, 500, 600, 700) *M* x *N* musterdefinierende Elemente umfasst und das Verfahren das Einbeziehen eines Maximums von *M* x *N* Relationsfunktionen

$\left(\beta_k^{u,v}(x,y)\right)$ zum Definieren eines Maximums von $M \times N$ datentragenden Mustern beinhaltet, um das genannte datentragende Muster zu bilden, wobei jedes der genannten $M \times N$ datentragenden Muster einen Satz von charakteristischen räumlichen Verteilungseigenschaften aufweist, der für das genannte diskrete Datenelement ($u_i$, $v_i$) spezifisch ist.

10. Verfahren nach Anspruch 8 oder 9 oder informationstragende Vorrichtung nach einem der Ansprüche 1 bis 7, wobei die genannte Relationsfunktion, ausgedrückt als $\beta_{k_1,k_2}^{u_i,v_i}(x,y)$, eine erste elementare Relationsfunktion $\varepsilon_{k_1}^{u_i}(x)$ und eine zweite elementare Relationsfunktion $\varepsilon_{k_2}^{v_i}(y)$ umfasst, so dass $\beta_{k_1,k_2}^{u_i,v_i}(x,y) = \varepsilon_{k_1}^{u_i}(x)\varepsilon_{k_2}^{v_i}(y)$ ist, und wobei die erste elementare Relationsfunktion $\varepsilon_{k_1}^{u_i}(x)$ die Aufgabe hat, eine erste Komponente $u_i$ eines diskreten Datenelements in einer ersten Datendomäne auf einen Satz von räumlichen Verteilungseigenschaften in einer ersten Raumdomäne $x$ gemäß einer ersten charakteristischen Parameterkomponente $k_1$ zu beziehen, und die zweite elementare Relationsfunktion $\varepsilon_{k_2}^{v_i}(y)$ die Aufgabe hat, eine zweite Komponente $v_i$ des diskreten Datenelements ($u_i$, $v_i$) in einer zweiten Datendomäne orthogonal zur ersten Datendomäne auf einen Satz von räumlichen Verteilungseigenschaften in einer zweiten Raumdomäne $y$ orthogonal zur ersten Raumdomäne gemäß einer zweiten charakteristischen Parameterkomponente $k_2$ zu beziehen; und/oder wobei die erste charakteristische Parameterkomponente $k_1$ und die zweite charakteristische Parameterkomponente $k_2$ gleich sind.

11. Verfahren oder informationstragende Vorrichtung nach einem vorherigen Anspruch, wobei das datentragende Muster (100, 300, 400, 500, 600, 700) musterdefinierende Elemente umfasst, die in $M$ Reihen in einer ersten Raumrichtung ($x$) und $N$ Spalten in einer zweiten Raumrichtung ($y$) angeordnet sind, und wobei die Relationsfunktion als ein Produkt von ersten und zweiten elementaren Relationsfunktionen $\left(\varepsilon_{k_1}^{u}(x)\,\varepsilon_{k_2}^{v}(y)\right)$ ausgedrückt werden können, wobei $k_1$, $k_2$ Ordnungen der elementaren Relationsfunktionen $(\varepsilon_{k_1}^{u}(x)\ \&\ \varepsilon_{k_2}^{v}(y))$ sind.

12. Informationstragende Vorrichtung nach Anspruch 7, wobei $a_1\varepsilon_{k_1}^{u=1}(x) + a_2\varepsilon_{k_1}^{u=2}(x) + \cdots + a_M\varepsilon_{k_1}^{u=M}(x) = 0$ ist, wenn und nur wenn $a_1 = a_2 = \cdots = a_M = 0$ ist; und/oder wobei $a_1\varepsilon_{k_2}^{v=1}(y) + a_2\varepsilon_{k_2}^{v=2}(y) + \cdots + a_N\varepsilon_{k_2}^{v=N}(y) = 0$ ist, wenn und nur wenn $a_1 = a_2 = \cdots = a_N = 0$ ist, und wobei $\varepsilon_{k_1}^{u}(x)$ die erste elementare Relationsfunktion ist und $\&\ \varepsilon_{k_2}^{v}(y)$ die zweite elementare Relationsfunktion ist, und $k_1, k_2$ Ordnungen der elementaren Relationsfunktionen sind.

13. Informationstragende Vorrichtung nach Anspruch 7, wobei die erste elementare Relationsfunktion als $\varepsilon_{k_1}^{u}(x)$ und die zweite elementare Relationsfunktion als $\varepsilon_{k_2}^{v}(y)$ ausgedrückt werden kann, und wobei die erste und zweite elementare Relationsfunktion linear unabhängig sind und Folgendes erfüllen:

$$\sum_{u=1}^{M} \varepsilon_{k_1}^{u}(x)\varepsilon_{k_1}^{u}(x') = \begin{cases} 1 & \text{if } x = x' \\ 0 & \text{if } x \neq x' \end{cases}.$$

14. Authentifizierungsvorrichtung mit einer informationstragenden Vorrichtung nach einem der Ansprüche 1 bis 7.

15. Authentifizierungsvorrichtung nach Anspruch 14, wobei die Relationsfunktion eine zweidimensionale Besselfunktion der Ordnung $k$ umfasst; und/oder ferner eine Information beinhaltet, die sich auf den genannten charakteristischen Parameter ($k$) beziehen.

**Revendications**

1. Dispositif porteur d'informations comportant un motif porteur de données, le motif porteur de données (100, 300, 400, 500, 600, 700) ayant codé ou intégré dans celui-ci un ensemble de données et comportant $M \times N$ éléments définissant le motif qui sont agencés pour définir un ensemble de propriétés de distribution spatiale caractéristiques $\left(\hat{I}_{u,v}^{M,N}(x,y)\right)$, dans lequel l'ensemble de données comporte au moins des données discrètes ($D_i(u_i, v_i)$), et lesdites données discrètes ont un motif porteur de données associé (10, 20, 30) qui est caractéristique desdites données discrètes, dans lequel lesdites données discrètes et le motif porteur de données associé desdites données discrètes sont reliés par une fonction de relation de caractéristiques $\left(\beta_k^{u,v}(x,y)\right)$, la fonction de relation de caractéristiques étant une fonction de transformation définissant des propriétés de distribution spatiale dudit motif porteur de données associé en fonction desdites données discrètes ($D_i(u_i, v_i)$) et d'un paramètre caractéristique ($k$) qui est indépendant par rapport auxdites données discrètes, et dans lequel des propriétés ou caractéristiques de la fonction de relation de caractéristiques sont étalées, dispersées ou distribuées au sein du motif porteur de données, dans lequel la fonction de relation de caractéristiques a pour effet d'étaler ou de disperser des données discrètes dans les éléments définissant des données du motif porteur de données ; ou dans lequel la fonction de relation de caractéristiques est destinée à fonctionner pour représenter des données discrètes avec un étalement d'informations ou de codage dans un domaine spatial.

2.  Dispositif porteur d'informations selon la revendication 1, dans lequel les données discrètes sont récupérables en effectuant une transformation inverse au moyen du paramètre caractéristique ($k$) qui est un paramètre clé ; et/ou dans lequel la fonction de transformation est une fonction d'étalement ponctuel qui peut étaler des données discrètes dans les éléments définissant le motif et les propriétés de distribution spatiale dudit motif porteur de données (100, 300, 400, 500, 600, 700) sont dépendantes d'un paramètre caractéristique ; et les éléments définissant le motif sont codés à l'échelle de gris, codés couleur, ou à la fois couleur et échelle de gris ; dans lequel, quand les éléments définissant le motif sont codés à l'échelle de gris, le codage apparaît sous la forme d'une distribution d'amplitude d'intensité ; et dans lequel, quand les éléments définissant le motif sont codés couleur, le codage apparaît sous la forme d'une couleur différente.

3.  Dispositif porteur d'informations selon la revendication 1 ou la revendication 2, dans lequel la fonction de relation de caractéristiques est une fonction de transformation bidimensionnelle $\beta_k^{u,v}(x,y)$, exprimable sous la forme d'un produit de deux fonctions de relation élémentaire unidimensionnelle $\varepsilon_k^u(x)$ et $\varepsilon_k^v(y)$, telles que $\beta_k^{u,v}(x,y) = \varepsilon_k^u(x)\,\varepsilon_k^v(y)$ ; dans lequel $u, v$ est une variable bidimensionnelle ayant un premier composant $u$ sur un premier axe ou axe-$u$ et un deuxième composant $v$ sur un deuxième axe ou axe-$v$ orthogonal par rapport au premier axe, $k$ est le paramètre caractéristique ; dans lequel $x$ définit une première direction spatiale et $y$ définit une deuxième direction spatiale ; et dans lequel les deux fonctions de relation élémentaire unidimensionnelle sont linéairement indépendantes.

4.  Dispositif porteur d'informations selon l'une quelconque des revendications précédentes, dans lequel l'ensemble de données comporte une pluralité de données discrètes, et lesdites données discrètes $D_i(u_i, v_i)$ ont chacune une fonction de relation de caractéristiques bidimensionnelle correspondante $\beta_k^{u_i,v_i}(x,y)$ et un motif porteur de données associé (10, 20, 30) qui est caractéristique desdites données discrètes, et l'ensemble de propriétés de distribution spatiale caractéristiques est attribuable aux motifs porteurs de données correspondants de ladite pluralité de données discrètes ; dans lequel le motif porteur de données comporte des éléments définissant le motif agencés en $M$ rangées le long d'une première direction spatiale ($x$) et $N$ colonnes le long d'une deuxième direction spatiale ($y$) ; et dans lequel les fonctions de relation de caractéristiques de la pluralité de données discrètes sont linéairement indépendantes et les données discrètes ont chacune un motif porteur de données correspondant spécifique, unique ou seul.

5.  Dispositif porteur d'informations selon l'une quelconque des revendications précédentes, dans lequel l'ensemble de données $D$ comporte une pluralité de données discrètes bidimensionnelles, dans lequel le motif porteur de données (100, 300, 400, 500, 600, 700) a des propriétés de distribution spatiale en mesure d'être représentées par $\hat{I}_{u,v}^{M,N}(x,y)$, où $\hat{I}_{u,v}^{M,N}(x,y) = \sum_{m=1}^{M}\sum_{n=1}^{N}\beta_k^{m,n}(x,y)\left\{\sum_i D_i(m,n)\right\}$.

**6.** Dispositif porteur d'informations selon la revendication 5, quand dépendante de la revendication 3, dans lequel l'expression se rapporte à l'ensemble de données par la relation : $\hat{I}_{u,v}^{M,N}(x,y) = \widehat{R_{k,N}} I_{x,y}^{M,N} \widehat{R_{k,M}}$ , où

$$\widehat{R_{k,M}} = \begin{bmatrix} \varepsilon_k(u=1, x=1) & \cdots & \varepsilon_k(u=1, x=M) \\ \vdots & \ddots & \vdots \\ \varepsilon_k(u=M, x=1) & \cdots & \varepsilon_k(u=M, x=M) \end{bmatrix},$$

et

$$\widehat{R_{k,N}} = \begin{bmatrix} \varepsilon_k(v=1, y=1) & \cdots & \varepsilon_k(v=1, y=N) \\ \vdots & \ddots & \vdots \\ \varepsilon_k(v=N, y=1) & \cdots & \varepsilon_k(v=N, y=N) \end{bmatrix}.$$

**7.** Dispositif porteur d'informations selon l'une quelconque des revendications précédentes, dans lequel la fonction de relation de caractéristiques est une fonction Bessel bidimensionnelle du premier type et ordre $k$, $k$ étant le paramètre caractéristique, une fonction Hankel, ou une fonction Riccati-Bessel.

**8.** Procédé servant à former un dispositif porteur d'informations, le dispositif porteur d'informations comportant un motif porteur de données (100, 300, 400, 500, 600, 700) ayant un ensemble de propriétés de distribution spatiale caractéristiques $(\hat{I}_{u,v}^{M,N}(x,y))$, le procédé comportant :

- le traitement d'un ensemble de données comportant une pluralité de données discrètes par une pluralité correspondante de fonctions de relation $(\beta_k^{u,v}(x,y))$ pour former le motif porteur de données, dans lequel les fonctions de relation sont des fonctions de transformation linéairement indépendantes et chaque fonction de relation $(\beta_k^{u,v}(x,y))$ relie des données discrètes $(u_i, v_i)$ à un motif porteur de données ayant un ensemble de propriétés de distribution spatiale caractéristiques desdites données discrètes, et
- dans lequel chacune des fonctions de relation est une fonction de transformation qui définit des propriétés de distribution spatiale dudit motif porteur de données en fonction desdites données discrètes $(u_i, v_i)$ et d'un paramètre caractéristique (k) qui est indépendant par rapport auxdites données discrètes, et des caractéristiques de distribution spatiale dudit motif porteur de données sont dépendantes d'un paramètre caractéristique qui est indépendant par rapport auxdites données discrètes, et les données discrètes sont récupérables par transformation inverse au moyen du paramètre caractéristique (k) sous la forme d'un paramètre clé ; et

dans lequel des propriétés ou caractéristiques de la fonction de relation de caractéristiques sont étalées, dispersées ou distribuées au sein du motif porteur de données, dans lequel la fonction de relation de caractéristiques a pour effet d'étaler ou de disperser des données discrètes dans les éléments définissant des données du motif porteur de données ; ou dans lequel la fonction de relation de caractéristiques est destinée à fonctionner pour représenter des données discrètes avec un étalement d'informations ou de codage dans le domaine spatial.

**9.** Procédé selon la revendication 8, dans lequel le motif porteur de données (100, 300, 400, 500, 600, 700) comporte $M \times N$ éléments définissant le motif et le procédé comporte l'étape consistant à inclure un maximum de $M \times N$ fonctions de relation $(\beta_k^{u,v}(x,y))$ pour définir un maximum de $M \times N$ motifs porteurs de données pour former ledit motif porteur de données, dans lequel chacun desdits $M \times N$ motifs porteurs de données a un ensemble de propriétés de distribution spatiale caractéristiques qui est spécifique auxdites données discrètes $(u_i, v_i)$.

**10.** Procédé selon la revendication 8 ou la revendication 9, ou dispositif porteur d'informations selon l'une quelconque des revendications 1 à 7, dans lesquels ladite fonction de relation, exprimée par $\beta_{k_1,k_2}^{u_i,v_i}(x,y)$ , comporte une

première fonction de relation élémentaire $\varepsilon_{k_1}^{u_i}(x)$ et une deuxième fonction de relation élémentaire $\varepsilon_{k_2}^{v_i}(y)$,

telle que $\beta_{k_1,k_2}^{u_i,v_i}(x,y) = \varepsilon_{k_1}^{u_i}(x)\varepsilon_{k_2}^{v_i}(y)$ et dans lesquels la première fonction de relation élémentaire $\varepsilon_{k_1}^{u_i}(x)$ est destinée à relier un premier composant $u_i$ de données discrètes dans un premier domaine de données à un ensemble de propriétés de distribution spatiale dans un premier domaine spatial $x$ en fonction d'un premier composant de paramètre caractéristique $k_1$, et la deuxième fonction de relation élémentaire $\varepsilon_{k_2}^{v_i}(y)$ est destinée à relier un deuxième composant $v_i$ des données discrètes $(u_i, v_i)$ dans un deuxième domaine de données orthogonal par rapport au premier domaine de données à un ensemble de propriétés de distribution spatiale dans un deuxième domaine spatial y orthogonal par rapport au premier domaine spatial en fonction d'un deuxième composant de paramètre caractéristique $k_2$ ; et/ou dans lesquels le premier composant de paramètre caractéristique $k_1$ et le deuxième composant de paramètre caractéristique $k_2$ sont égaux.

11. Procédé ou dispositif porteur d'informations selon l'une quelconque des revendications précédentes, dans lesquels le motif porteur de données (100, 300, 400, 500, 600, 700) comporte des éléments définissant le motif agencés en M rangées le long d'une première direction spatiale (x) et N colonnes le long d'une deuxième direction spatiale (y), et dans lesquels la fonction de relation est exprimable sous la forme d'un produit de première et deuxième fonctions de relation élémentaire $\left(\varepsilon_{k_1}^u(x)\,\varepsilon_{k_2}^v(y)\right)$, $k_1$, $k_2$ étant des ordres des fonctions de relation élémentaire $\left(\varepsilon_{k_1}^u(x)\,\&\,\varepsilon_{k_2}^v(y)\right)$.

12. Dispositif porteur d'informations selon la revendication 7, dans lequel $a_1\varepsilon_{k_1}^{u=1}(x) + a_2\varepsilon_{k_1}^{u=2}(x) + \cdots + a_M\varepsilon_{k_1}^{u=M}(x) = 0$ si et uniquement si $a_1\ a_2 = \cdots = a_M = 0$ ; et/ou dans lequel $a_1\varepsilon_{k_2}^{v=1}(y) + a_2\varepsilon_{k_2}^{v=2}(y) + \cdots + a_N\varepsilon_{k_2}^{v=N}(y) = 0$ si et seulement si $a_1 = a_2 = \cdots = a_N = 0$, et dans lequel $\varepsilon_{k_1}^u(x)$ est la première fonction de relation élémentaire et $\&\,\varepsilon_{k_2}^v(y)$ est la deuxième fonction de relation élémentaire, et $k_1$, $k_2$ sont des ordres des fonctions de relation élémentaire.

13. Dispositif porteur d'informations selon la revendication 7, dans lequel la première fonction de relation élémentaire est exprimable par $\varepsilon_{k_1}^u(x)$ et la deuxième fonction de relation élémentaire est exprimable par $\varepsilon_{k_2}^v(y)$, et où les première et deuxième fonctions de relation élémentaire sont linéairement indépendantes et satisfont à :

$$\sum_{u=1}^M \varepsilon_{k_1}^u(x)\varepsilon_{k_1}^u(x') = \begin{cases} 1 & \text{si } \quad x = x' \\ 0 & \text{si } \quad x \neq x' \end{cases}.$$

14. Dispositif d'authentification comportant un dispositif porteur d'informations selon l'une quelconque des revendications 1 à 7.

15. Dispositif d'authentification selon la revendication 14, dans lequel la fonction de relation comporte une fonction Bessel bidimensionnelle d'ordre k ; et/ou comprenant par ailleurs des informations se rapportant audit paramètre caractéristique (k).

$\hat{I}_{u,v}^{M,N}(x,y)$ for $\boldsymbol{D_n}$ , where $\boldsymbol{D_n} = (D_1(u_1,v_1), D_2(u_2,v_2), D_3(u_3,v_3))$ & $k = 10$

Fig. 1

$\hat{I}_{u=2,v=64}^{M,N}(x,y), k = 10$

$D_1 = (u_1,v_1) = (2,64)$

Fig. 1A

$\hat{I}_{u=46,v=20}^{M,N}(x,y), k = 10$

$D_2 = (u_2,v_2) = (46,20)$

Fig. 1B

$\hat{I}_{u=60,v=6}^{M,N}(x,y), k = 10$

$D_3 = (u_3,v_3) = (60,6)$

Fig. 1C

$\hat{I}^{M,N}_{u=20,v=20}(x,y), k = 10$

$D_4 = (u_4, v_4) = (20, 20)$

Fig. 2A

$\hat{I}^{M,N}_{u=20,v=20}(x,y), k = 50$

$D_4 = (u_4, v_4) = (20, 20)$

Fig. 2B

$\hat{I}^{M,N}_{u,v}(x,y) \; for \; \boldsymbol{D_n} \; \& \; k = 10, where \; \boldsymbol{D_n} =$
$\left(D_1(u_1,v_1), D_2(u_2,v2_1), D_3(u_3,v_3),\right.$
$\left.D_4(u_4,v_4)\right)$

Fig. 2

$\hat{I}^{M,N}_{u,v}(x,y) \; for \; \boldsymbol{D_n} \; \& \; k = 50, where \; \boldsymbol{D_n} =$
$\left(D_1(u_1,v_1), D_2(u_2,v2_1), D_3(u_3,v_3),\right.$
$\left.D_4(u_4,v_4)\right)$

Fig. 3

$\hat{I}_{u,v}^{M,N}(x,y) \; for \; \boldsymbol{D_n} \; \& \; k_1 = 100 \; \& \; k_2 = 200, where \; \boldsymbol{D_n} = \left( D_1(u_1, v_1) \right)$

Fig. 4

Fig. 5

Fig. 6

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110259962 A
- US 20020179717 A